# EUROPEAN PATENT APPLICATION

(11) **EP 3 079 224 A1**
(43) Date of publication of application: **12.10.2016**
(21) Application number: 16162747.6
(22) Date of filing: 30.03.2016
(51) Int. Cl.: H02J 7/35, H02J 7/34

(54) **POWER MANAGEMENT SYSTEM AND METHOD OF CONTROLLING HOME APPLIANCE**

(30) Priority: 06.04.2015 KR 20150048318
(71) Applicant: LG Electronics Inc., Seoul 07336 (KR)
(72) Inventor: PARK, Shinhyun, 08592 Seoul (KR); CHOI, Byoungsuk, 08592 Seoul (KR)
(74) Representative: Ter Meer Steinmeister & Partner

(57) **Abstract**

A power management system (10) includes a home appliance (100), a power generator (300) configured to generate electric energy, and a battery (200) charged with the electric energy generated by the power generator (300) and electrically connected to the home appliance (100) to supply power to the home appliance (100). The battery (200) includes a remaining amount checking unit (240) configured to check the remaining amount of electric energy and whether the battery (200) is being charged with the electric energy from the power generator (300), and the home appliance (100) controls a load based on information on the remaining amount of electric energy and charging information received from the battery (200).

## Description

### The Background

### 1. The field

The present invention relates to a power management system and a method of controlling a home appliance.

### 2. Description of the related art

Recently, as awareness of energy and environmental crisis has heightened, importance of power production using alternative energy such as solar cells and effective usage of power has increased. As a result, usage of solar cells in homes has increased and development of technology of a power supply apparatus for comprehensively managing power and effectively utilizing energy has increased.

In particular, technology of generating power using solar heat concentrates solar heat via a solar collector and generates electricity using the generated heat, and comes into wide use residentially and industrially.

However, in technology of generating power using solar heat, energy collection is influenced by climate conditions. For example, since energy cannot be collected in cloudy or wet weather or at night, energy collection and management predictability are deteriorated.

That is, since a conventional power supply system using solar heat cannot consider various factors influencing energy collection and consumption, it is difficult for a user to manage energy. In particular, serious problems may occur in an island or a remote area where power cannot be received from an electric power company and only power obtained from solar heat can be used.

### The Summary

The present invention is to address the above-described problems and an object of the present invention is to provide a power management system capable of efficiently managing collected energy and a method of controlling a home appliance configuring the power management system.

According to an aspect of the present invention, there is provided a power management system including a home appliance, a power generator configured to generate electric energy, and a battery charged with the electric energy generated by the power generator and electrically connected to the home appliance to supply power to the home appliance, wherein the battery includes a remaining amount checking unit configured to check the remaining amount of electric energy and whether the battery is being charged with the electric energy from the power generator, and wherein the home appliance controls a load based on information on the remaining amount of electric energy and charging information received from the battery.

The power generator may be a solar power generator configured to convert solar thermal energy into electric energy.

The home appliance and the battery may perform wireless communication or short-range wireless communication.

Upon determining that the remaining charge of the battery is equal to or greater than a predetermined range via the information transmitted from the battery to the home appliance, the home appliance may perform normal mode operation, and upon determining that the remaining charge of the battery is less than the predetermined range, the home appliance may perform power-saving mode operation.

Upon determining that the remaining charge of the battery is less than the predetermined range, energy information may be displayed via a display included in the home appliance.

Upon determining that the battery is charged with electric energy from the power generator via the information transmitted from the battery to the home appliance, the home appliance may perform normal mode operation.

The battery may further include a DC/AC converter configured to convert DC power into AC power.

The home appliance may include a load unit consuming electric energy received from the battery, a communication unit configured to perform wired or wireless communication with the battery and to receive information on the remaining charge of the battery and charging information, and a controller configured to control the amount of power consumed by the load unit based on energy information of the battery received via the communication unit.

According to another aspect of the present invention, there is provided a method of controlling a home appliance including receiving electric energy from a battery and operating the home appliance, transmitting information on a remaining charge of the battery and charging information from a controller of the battery to a controller of the home appliance, and controlling load of the home appliance based on the information transmitted to the controller of the home appliance.

The battery may be charged with electric energy received from a solar power generator.

Upon determining that the remaining charge of the battery is equal to or greater than a predetermined range via the information transmitted from the controller of the battery to the controller of the home appliance, the home appliance may perform normal mode operation, and upon determining that the remaining charge of the battery is less than the predetermined range, the home appliance performs power-saving mode operation.

Upon determining that the remaining charge of the battery is less than the predetermined range, energy information of the battery may be displayed via a display included in the home appliance.

Upon determining that the battery is charged with electric energy received from the power generator via the information transmitted from the battery, the home appliance may perform normal mode operation.

The power management system and the method of controlling the home appliance according to the embodiments of the present invention have the following advantages.

First, since the home appliance operates based on energy information received from the battery, it is possible to increase energy efficiency.

Second, even when the battery is not being charged, since the home appliance can operate using energy of the battery charged via sunlight, the home appliance operates even in an area where power cannot be received.

### Brief description of the drawings

FIG. 1 is a diagram schematically showing a power management system according to an embodiment of the present invention.
FIG. 2 is a block diagram schematically showing the control configuration of a power management system according to an embodiment of the present invention.
FIG. 3 is a flowchart illustrating a method of controlling a home appliance according to an embodiment of the present invention.

### The detailed description

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

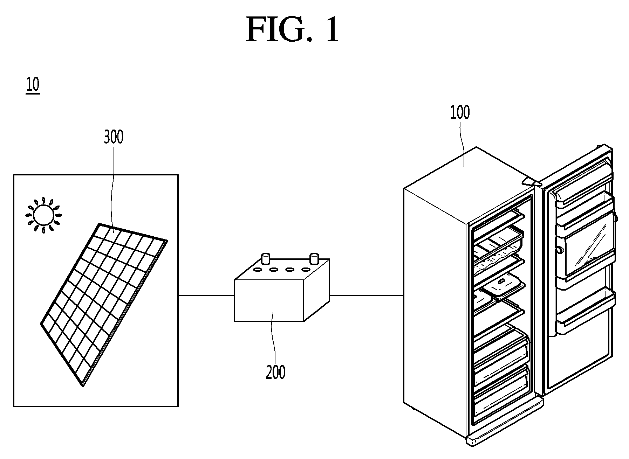

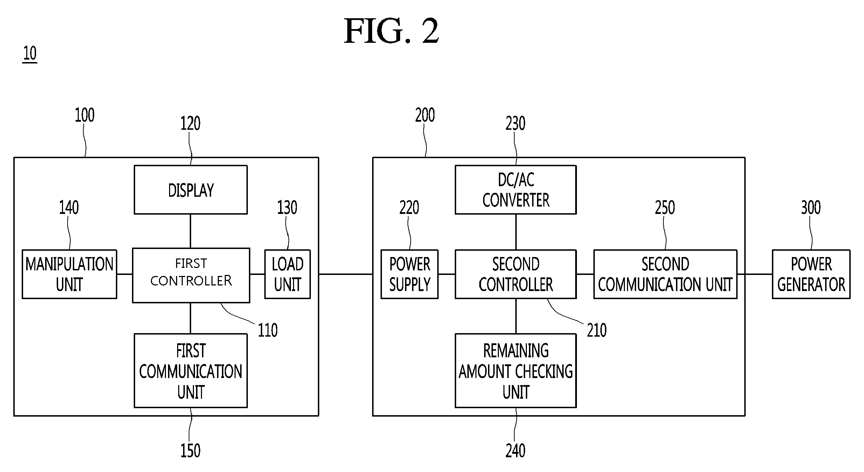

FIG. 1 is a diagram schematically showing a power management system according to an embodiment of the present invention and FIG. 2 is a block diagram schematically showing the control configuration of a power management system according to an embodiment of the present invention.

Referring to FIGS. 1 and 2, the power management system according to the embodiment of the present invention manages an energy source acquired from solar heat. The amount of energy generated or used in the energy source may be metered.

More specifically, the power management system 10 according to one embodiment of the present invention may include a home appliance 100, a battery 200 for supplying power to the home appliance 100 and a power generator 300 for generating electricity using sunlight.

The home appliance 100 is an energy consumption appliance and may include one or more of a refrigerator, a washing machine, an air conditioner, a dryer or a cooker. When a plurality of home appliances 100 is provided, the plurality of home appliances 100 may transmit or receive energy related information or additional information via a home network.

The power generator 300 may collect solar heat via a heat collector or a reflector and use the collected heat for hot-water supply or a space heater or generate electricity using a steam turbine. That is, a heat collector for absorbing light is provided in a house including the home appliance 100 and thermal energy acquired via the heat collector is converted into electric energy. Accordingly, the power generator 300 described in the present invention generates electric power via solar energy and may be implemented in various manners.

The home appliance 100 may include a first controller 110, a display 120, a load unit 130, a manipulation unit 140 and a first communication unit 150.

The first controller 110 controls overall operation of the home appliance 100. The first controller 110 may process information suitable for operation or driving of the home appliance 100 or control specific functions by receiving and processing information including signals and data received from the components or transmitting signals including operation commands to the components to operate the components.

The display 120 may display information on operation and state of the home appliance 100. The information on the operation and state of the home appliance 100 may include power information, information on an operation state, information received from another component, etc.

The information may be displayed on the display 120 in the form of text, voice, moving images and lighting messages output via a display screen or speaker included in the home appliance 100.

The load unit 130 may be a component for controlling a power supply time and the intensity of power supplied to a component consuming power in association with operation of the home appliance 100. Accordingly, the first controller 110 may control the load unit 130 to control the total amount of power consumed by the home appliance 100. That is, the first controller 110 may control the amount of power consumed by the home appliance 100 by adjusting the intensity of power supplied to the component consuming power or stopping operation of a specific component.

For example, when the home appliance 100 is a refrigerator, the cooling capacity of a compressor may be decreased at night to increase the temperature of a storeroom or the brightness of a lamp turned on when a door is opened may be decreased, thereby decreasing the power consumption of the refrigerator.

The manipulation unit 140 may be a component for enabling a user to input a control command including an operation condition for operating the home appliance 100. Accordingly, the home appliance 100 may operate in various operation modes by manipulating the manipulation unit 140.

The first communication unit 150 may include at least one communication module for enabling wired/wireless communication between the home appliance 100 and the battery 200 and between the home appliance 100 and another appliance. The first communication unit 150 may further include one or more interface modules for connecting the home appliance 100 to one or more networks.

Accordingly, the home appliance 100 may communicate with the battery 200 via the first communication unit 150. Communication may be performed via a short-range communication module. The short-range communication module may include at least one of Bluetooth, radio-frequency identification (RFID), Infrared Data Association (IrDA), Ultra WideBand (UWB), and ZigBee, Near-Field Communication (NFC), Wireless Fidelity (Wi-Fi), Wi-Fi Direct, wireless universal serial bus (USB).

The battery 200 may include a second controller 210, a power supply 220, a DC/AC converter 230, a remaining amount checking unit 240 and a second communication unit 250.

The battery 200 stores and supplies electric energy received from the power generator 300 to the home appliance 100. In addition, the battery 200 supplies energy information to a user or the home appliance 100 such that the home appliance 100 operates based on the energy information.

The second controller 210 controls overall operation of the battery 200. The second controller 210 receives signals, data and information from the components configuring the battery 200 and processes signals, data and information output to the components.

The power supply 220 may be electrically connected to the plug of the home appliance 100 to supply power to the home appliance 100. The power supplied to the home appliance 100 via the power supply 220 is electric energy supplied by the power generator 300.

The DC/AC converter 230 is a converter or inverter for converting DC power into AC power. The power generator 300 supplies DC power, whereas a general home appliance requires AC power. Accordingly, the DC/AC converter 230 converts DC power received from the power generator 300 and stored in the battery 200 into AC power and supplies the converted AC power to the home appliance 100 via the power supply 220.

The remaining amount checking unit 240 checks the remaining charge of the battery 200 or whether the battery 200 is charged. In other words, the charge remaining in the battery 200 or whether the battery 200 is currently being charged is checked via the remaining amount checking unit 240. The remaining charge of the battery 200 may be measured by measuring the voltage of the battery. However, the present invention is not limited thereto and the remaining charge of the battery 200 may be checked using various methods. Information on the remaining charge of the battery is transmitted to the second controller 210.

The second communication unit 250 enables wired/wireless communication between the battery 200 and the home appliance 100 and may perform communication using the same method as the first communication unit 250. The second communication unit 250 may perform communication with an external server to receive weather information and time information of an area where the battery 200 is installed. The second controller 210 may determine whether electric energy is generated by the power generator 300 based on the received information.

Hereinafter, a process of receiving energy information from the battery 200 and operating the home appliance 100 based on the received energy information will be described.

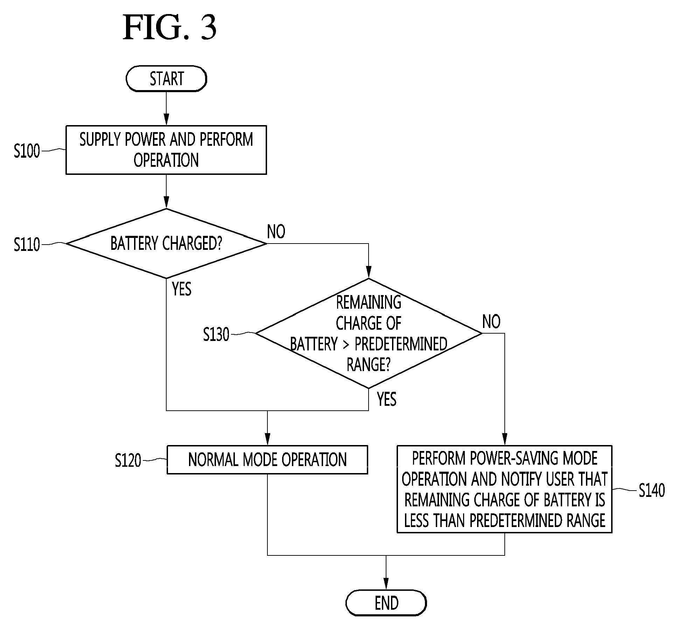

FIG. 3 is a flowchart illustrating a method of controlling a home appliance according to an embodiment of the present invention.

Hereinafter, normal mode operation means operation which consumes power in order to perform the function of the home appliance 100. Power-saving mode operation means operation which consumes minimum power in order to perform the function of the home appliance 100 under control of the load unit 130. Accordingly, when the home appliance 100 operates in a power saving mode, the amount of consumed power is reduced as compared to the normal mode operation.

The normal mode operation of the refrigerator is performed in the daytime when the door of the refrigerator is frequently opened and closed. At this time, the desired temperature of the refrigerator may be relatively low such that cool air sufficiently flows in the refrigerator. The power-saving mode operation of the refrigerator is performed at night when the door of the refrigerator is infrequently opened and closed. At this time, the desired temperature of the refrigerator may be relatively high such that cool air minimally flows in the refrigerator.

Referring to FIG. 3, the home appliance 100 is electrically connected to the battery 200 and operates via electric energy received from the battery 200 (S100). The electric energy for operating the home appliance 100 may be stored in the battery 200 or may be directly received from the power generator 300. Initially, the home appliance 100 may perform the normal mode operation on the assumption that the battery 200 is being charged or the battery 200 has been fully charged.

The second controller 210 checks whether the battery 200 is being charged via the power generator 300 (S110). Whether the battery is being charged may be checked via the remaining amount checking unit 240 or depending on whether the power generator 300 operates based on the weather information and the time information.

Through the above process, upon determining that the battery 200 is being charged with electric energy from the power generator 300, the second controller 210 transmits information on charging to the first communication unit 150 via the second communication unit 250. The first controller 110 of the home appliance 100 performs the normal mode operation under control of the load unit 130 (S120).

However, upon determining that the battery 200 is not being charged, the second controller 210 acquires information on the remaining charge of the battery 200 via the remaining amount checking unit 240 (S130).

When the remaining charge of the battery 200 is equal to or greater than a predetermined range, the home appliance 100 continuously performs the normal mode operation. The predetermined range is set by a user or a manufacturer and is a minimum power value for operating the home appliance 100 for a predetermined period.

Since the battery 200 is not being charged, the second communication unit 250 of the battery 200 may transmit the information on the remaining charge of the battery 200 to the home appliance 100 at a predetermined time interval, thereby increasing predictability of the operation time of the home appliance 100.

However, when the remaining charge of the battery 200 is less than the predetermined range, the home appliance 100 performs the power-saving mode operation (S140). That is, in a state in which the battery is not charged, since the remaining charge of the battery 200 is less than the predetermined range, the home appliance 100 performs a smallest number of functions, thereby reducing the amount of consumed power.

Information indicating that the remaining charge of the battery is less than the predetermined range may be displayed via the display 120 of the home appliance 100 or may be transmitted to a user terminal (not shown), such that the user confirms the information on the remaining amount of energy. The user who confirms the information on the remaining amount of energy may control operation of the home appliance 100 by manipulating the manipulation unit 140.

Since the home appliance 100 may operate using the energy stored in the battery 200 even when the battery 200 is not being charged, the home appliance 100 can operate in an area where power is not supplied via a power line.

In addition, since the home appliance 100 operates based on the information on the remaining charge of the battery 200, the operation time of the home appliance 100 may be maximized within the predetermined capacity of the battery 200. That is, even when electric energy is not generated by the power generator 300, the home appliance 100 may operate for a maximum time, thereby increasing energy efficiency.

In addition, since the user may receive the remaining charge of the battery 200, it is possible to increase predictability of operation of the home appliance 100.

## Claims

1. A power management system (10) comprising:
a home appliance (100);
a power generator (300) configured to generate electric energy; and
a battery (200) charged with the electric energy generated by the power generator (300) and electrically connected to the home appliance (100) to supply power to the home appliance (100),
wherein the battery (200) includes a remaining amount checking unit (240) configured to check the remaining amount of electric energy and whether the battery (200) is being charged with the electric energy from the power generator (300), and
wherein the home appliance (100) is configured to control a load based on information on the remaining amount of electric energy and charging information received from the battery (200).

2. The power management system according to claim 1, wherein the power generator (300) is a solar power generator configured to convert solar thermal energy into electric energy.

3. The power management system according to claim 1 or 2, wherein the home appliance (100) and the battery (200) perform wireless communication or short-range wireless communication.

4. The power management system according to any one of the claims 1 to 3, wherein:
upon determining that the remaining charge of the battery (200) is equal to or greater than a predetermined range via the information transmitted from the battery (200) to the home appliance (100), the home appliance (100) is configured to perform normal mode operation, and
upon determining that the remaining charge of the battery (200) is less than the predetermined range, the home appliance (100) is configured to perform power-saving mode operation.

5. The power management system according to claim 4, wherein, upon determining that the remaining charge of the battery (200) is less than the predetermined range, energy information is displayed via a display (120) included in the home appliance (100).

6. The power management system according to any one of the claims 1 to 5, wherein, upon determining that the battery (200) is being charged with electric energy from the power generator (300) via the information transmitted from the battery (200) to the home appliance (100), the home appliance (100) is configured to perform normal mode operation.

7. The power management system according to any one of the claims 1 to 6, wherein the battery (200) further includes a DC/AC converter (230) configured to convert DC power into AC power.

8. The power management system according to any one of the claims 1 to 7, wherein the home appliance (100) includes:
a load unit (130) consuming electric energy received from the battery (200);
a communication unit (150) configured to perform wired or wireless communication with the battery (200) and to receive information on the remaining charge of the battery (200) and charging information; and
a controller (110) configured to control the amount of power consumed by the load unit (130) based on energy information of the battery (200) received via the communication unit (150).

9. A method of controlling a home appliance (100), the method comprising:
receiving electric energy from a battery (200) and operating the home appliance (100);
transmitting information on a remaining charge of the battery (200) and charging information from a controller (210) of the battery (200) to a controller (110) of the home appliance (100); and
controlling load of the home appliance (100) based on the information transmitted to the controller (110) of the home appliance (100).

10. The method according to claim 9, wherein the battery (200) is charged with electric energy received from a solar power generator (300).

11. The method according to claim 9 or 10, wherein:
upon determining that the remaining charge of the battery (200) is equal to or greater than a predetermined range via the information transmitted from the controller (210) of the battery (200) to the controller (110) of the home appliance (100), the home appliance (100) performs normal mode operation, and
upon determining that the remaining charge of the battery (200) is less than the predetermined range, the home appliance (100) performs power-saving mode operation.

12. The method according to claim 11, wherein, upon determining that the remaining charge of the battery (200) is less than the predetermined range, energy information of the battery (200) is displayed via a display (120) included in the home appliance (100).

13. The method according to any one of the claims 9 to 12, wherein, upon determining that the battery (200) is being charged with electric energy received from the power generator (300) via the information transmitted from the battery (200), the home appliance (100) performs normal mode operation.
